# EUROPEAN PATENT SPECIFICATION

(11) **EP 2 582 229 B1**
(45) Date of publication and mention of the grant of the patent: **25.06.2014**
(21) Application number: 11727775.6
(22) Date of filing: 13.05.2011
(51) Int. Cl.: A01K 41/06

(54) **EGG-SETTER TRAY, AND TRANSPORT SYSTEM THAT USES SAID TRAY**
EIERTRÄGER UND TRANSPORTSYSTEM MIT DIESEM TRÄGER
PLATEAU À OEUFS, ET SYSTÈME DE TRANSPORT L'UTILISANT

(30) Priority: 15.06.2010 IT TO20100515
(43) Date of publication of application: 24.04.2013
(73) Proprietor: GIORDANO POULTRY-PLAST S.p.A., I-12023 Caraglio (Cuneo) (IT); Twinpack B.V., 2211 VM Noordwijkerhout (NL)
(72) Inventor: GIORDANO, Oscar, I-12023 Caraglio (Cuneo) (IT)
(74) Representative: Buzzi, Franco
(86) International application number: PCT/IB2011/052116
(87) International publication number: WO 2011/158140

(56) References cited:
- GB-A- 1 334 330
- US-A- 3 147 738
- US-A- 3 817 215
- US-A- 4 558 661

## Description

### Field of the invention

The present invention relates in general to the transport of hatchery eggs from the production site to an incubator.

More in particular the invention regards an egg-setter tray that can be used both during transport and in the course of the process of incubation of the eggs, of the type traditionally comprising a generally quadrangular body formed with parallel rows of cells for containing the eggs.

### State of the art

For the transport of trays of this sort according to the known art, one example of which is disclosed and illustrated in US-4558661A, it is currently normal practice to provide purposely designed metal supports or frames, normally equipped with wheels, within which the trays are inserted in a condition where they are set on top of one another, like drawers, for their transfer on board lorries and transport to the hatchery plants.

Supports of this sort, in addition to being cumbersome and heavy, involve difficulties of handling during the operations of loading on and unloading off the lorry, also as regards the operations of introduction and extraction of the trays into/from the supports and their subsequent placing within the incubators.

### Summary of the invention

The object of the present invention is to overcome the aforesaid drawbacks and to provide an egg-setter tray that does not require the use of a metal support or frame for transport from the production site to the hatchery, thus rendering more convenient both the operations of loading the trays on and unloading them off the transport vehicle and the operation of placing them in the incubator, also enabling mechanization and automation of said operations.

According to the invention, the above object is achieved thanks to an egg-setter tray of the type defined at the start, the main characteristic of which lies in the fact that it has appendages projecting upwards to engage directly a similar overlying tray selectively in a condition where said trays are set close to one another when they are stacked in the same angular position or in a condition where said trays are set at a distance apart when they are stacked in angular positions that are different from one another, mutually turned 180°.

Thanks to this arrangement, the trays according to the invention can be stacked directly on top of one another both in the condition where they are set at a distance apart in the presence of the eggs, and in the condition where they are set close to one another in the absence of the eggs, in this case with less encumbrance. The transport of the trays thus stacked avoids recourse to the traditional metal supports or frames for transport, which can be replaced by simple pallets on which the stacks of trays, for example set in pairs alongside one another, rest.

Conveniently, the projecting appendages of the tray are set in pairs asymmetrically with respect to the centre of the body and are hollow underneath. When the tray is set on top of a similar tray with the two trays set in the same angular position, the appendages of the bottom tray engage within the cavities of the appendages of the top tray. In this way, the distance between the two trays set on top of one another can be reduced from approximately 70 mm, corresponding to the condition where they are set at a distance apart in the presence of the eggs within the cells, to approximately 30 mm in the absence of the eggs, which enables minimization of the encumbrance in the condition of storage of the trays at the production site and of subsequent transport for return of the empty trays from the hatchery to the production site.

The subject of the invention is also a transport system that uses a plurality of trays of this sort in the stacked condition and a pallet, typically made of moulded plastic material, on which the stacked trays are rested, for example, in two columns set alongside one another for handling thereof.

### Brief description of the drawings

The invention will now be described in detail with reference to the annexed drawings, which are provided purely by way of non-limiting example and in which:
- Figure 1 is a schematic and partial perspective view that shows a transport system that uses egg-setter trays according to the invention;
- Figure 2 is a perspective view of one of the trays;
- Figure 3 is a longitudinal vertical cross-sectional view that shows a first condition of stacking of a pair of trays, in the presence of the eggs;
- Figure 4 is a view similar to that of Figure 3 illustrating a second condition of stacking of two trays, in the absence of the eggs,
- Figure 5 is a perspective view at a larger scale that shows the pallet of the system for transport of the trays according to the invention; and
- Figure 6 is a schematic view in elevation that shows a pair of trays according to the invention in the condition where they are installed in an incubator.

### Detailed description of the invention

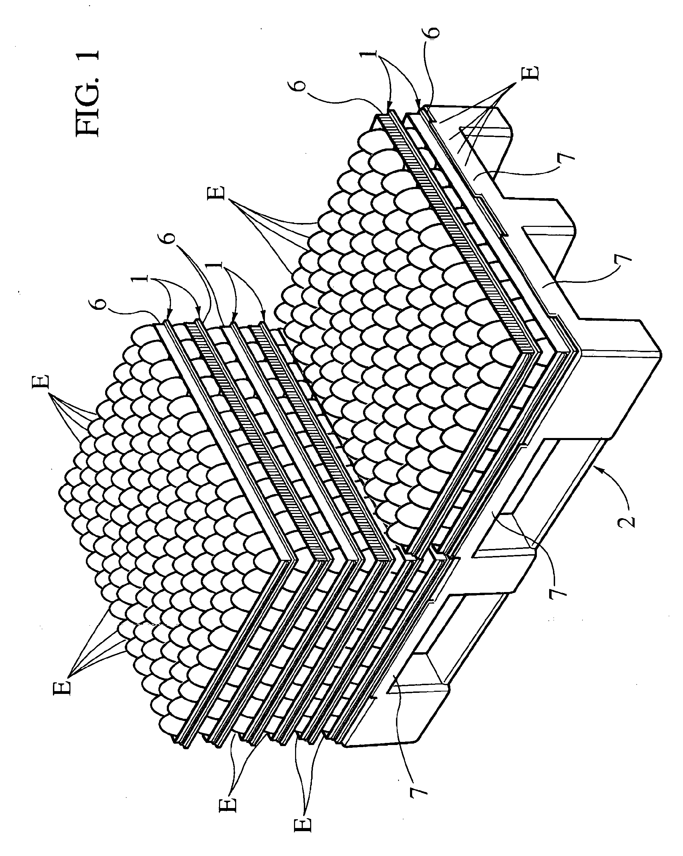

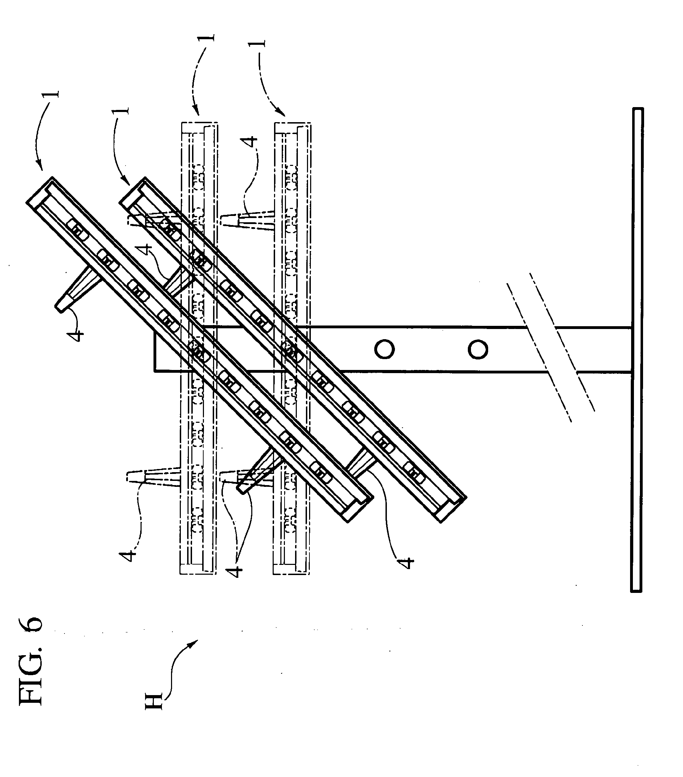

With initial reference to Figure 1, a system for the transport of hatchery eggs E from the production site to an incubator, the supporting frame of which is represented schematically and designated as a whole by H in Figure 6, comprises a series of egg-setter trays 1 directly stacked on one another, for example in two columns set alongside one another, on a pallet 2. In Figure 1, the two columns set alongside one another are represented with a different number of trays 1 only for greater clarity of illustration in so far as normally said columns prepared for transport on the pallet 2 will typically comprise an equal number of trays 1.

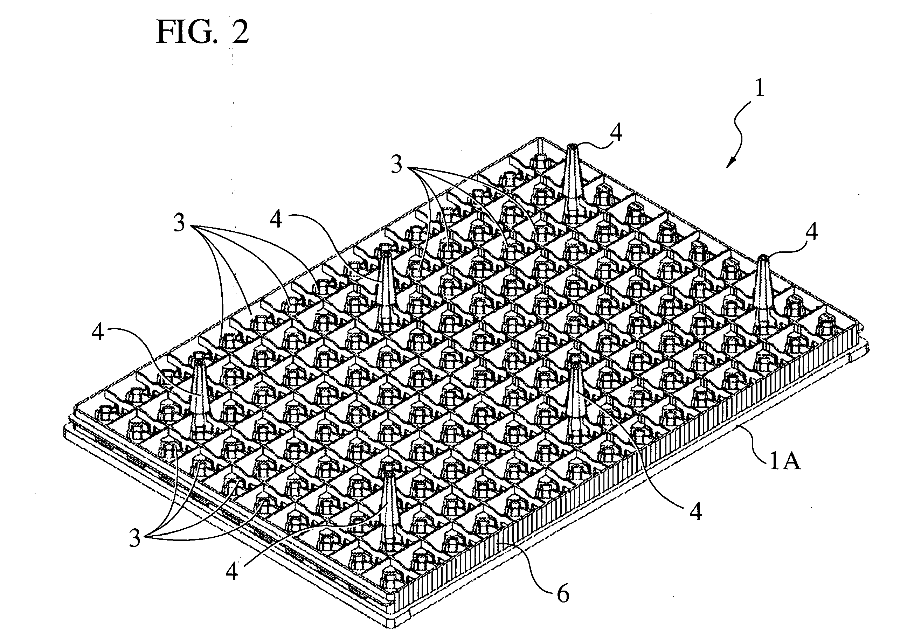

With reference now in greater detail to Figure 2, each tray 1 consists of a monolithic quadrangular body, preferably made of moulded plastic material, having a generally plane base la and a plurality of cells 3, that are to receive the eggs E, arranged in parallel rows at the sides of the body. Typically, ten rows of fifteen cells each can be provided for containing a total of 150 eggs.

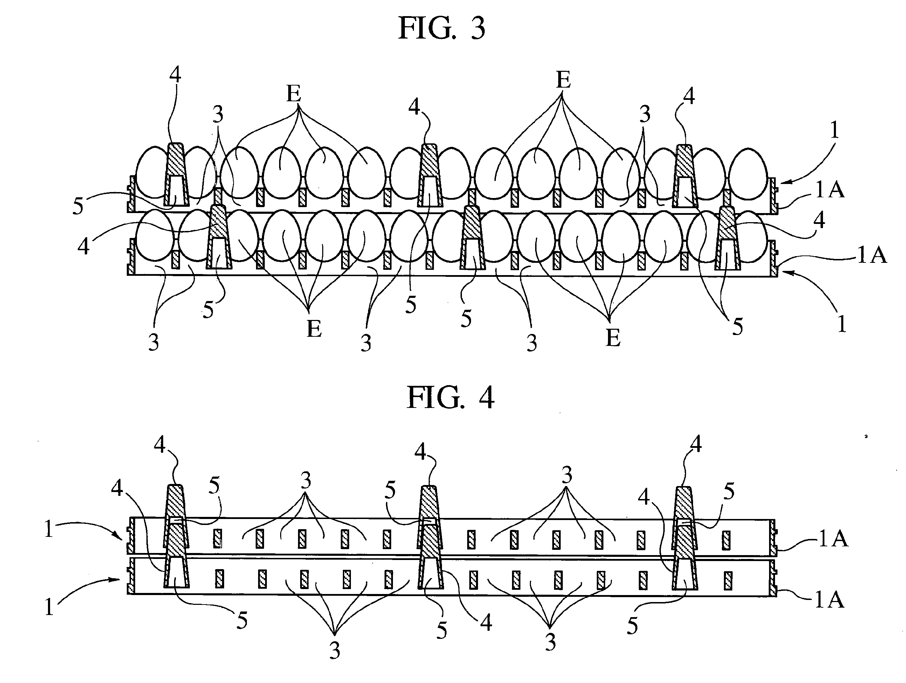

According to the peculiar characteristic of the invention, the tray 1 is formed with appendages 4 projecting upwards and having a tapered shape. In the case of the example illustrated, three pairs of projecting appendages 4 are provided, set at the same distance from one another and set asymmetrically with respect to a transverse centre plane of the tray 1. As it can be seen in greater detail in Figures 3 and 4, the asymmetry is such that, for example, between the intermediate pair of projecting appendages 4 and each lateral pair of projecting appendages 4, i.e., the pair located towards one side and the pair located towards the opposite side of the tray 1, there are six cells 3 for each row, whilst between the other sides of the tray 1 and the corresponding pair of lateral projecting appendages 4 there are two cells 3 on one side of the tray and just one cell 3 on the opposite side.

As it can also be clearly seen in Figures 3 and 4, the projecting appendages 4 are formed underneath with respective tapered cavities 5 having a shape complementary to that of their top portions.

A further characteristic of each tray 1 is that formed along one of its major sides, but not along the other, are identification marks 6, for example in the form of *haut-relief* or *bas-relief* impressions, having the function of enabling immediate identification of the angular orientation in the horizontal plane of the tray 1 in a first position, where said impressions 6 are set facing an observer, or else in a second position, namely, rotated through 180° with respect to the first, where said impressions 6 are on the side facing away from the observer. This arrangement has the function of facilitating stacking of the trays 1, with the modalities clarified in what follows, also with the use of mechanized equipment provided with photoelectric-cell detection or camera-vision systems, or the like.

Figures 3 and 4 exemplify the modalities of stacking of two trays 1 according to the invention directly set on top of one another according to two different configurations, namely, a configuration for containing and transporting the eggs E (Figure 3) and a configuration where the eggs E are absent (Figure 4). Obviously, the arrangement illustrated, described hereinafter, will be repeated identically for each pair of contiguous trays 1 set on top of one another.

In the case of Figure 3, i.e., as has been said in the presence of the eggs E within the cells 3 of the trays 1, the latter are directly rested on top of one another in a condition where they are set at a distance apart and where the tops of the projecting appendages 4 of the bottom tray 1 come to bear, from beneath, upon the bases of corresponding cells 3 of the top tray 1. To obtain this, the two trays 1 are set in angular positions that are different from one another, where one is turned 180° in its own plane of lie with respect to the other. Thanks to the asymmetrical arrangement of the projecting appendages 4, when the two trays 1 are stacked in said mutually opposite angular positions, the projecting appendages 4 of the bottom tray 1 are staggered with respect to those of the top tray 1 in the way represented in Figure 3. In this case, the impressions 6 of one of the two trays 1, for example the top one, are set facing a front side of the stack, whereas the reference impressions 6 of the other tray 1, for example the top one, are set facing the opposite side.

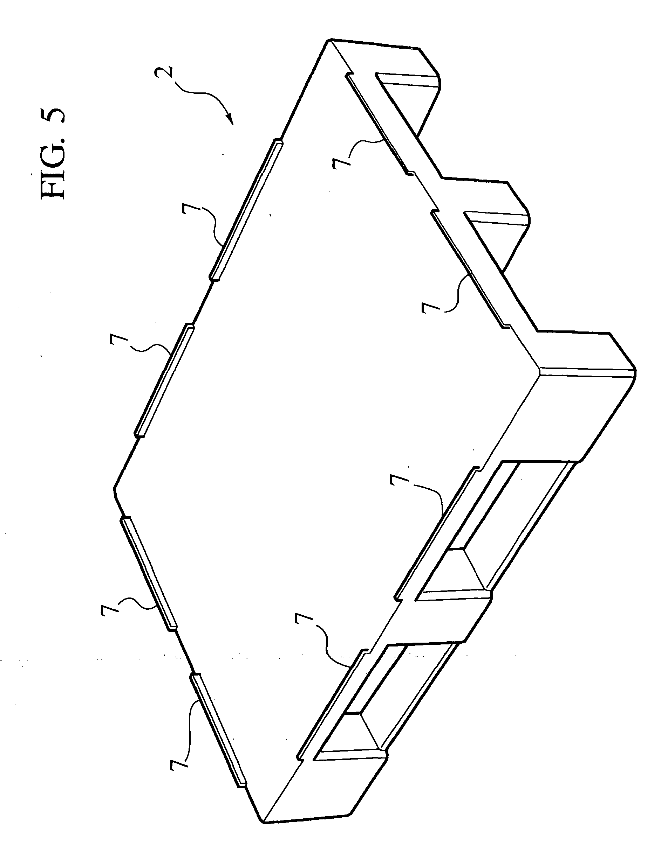

With this arrangement, the trays 1 containing the eggs E and thus stacked on top of one another can be simply rested on the pallet 2 so as to form the two stacks set alongside one another, as represented in Figure 1. In order to enable a convenient and stable positioning of the stacks of trays 1, the pallet 2, as represented in Figure 5, can be conveniently formed at the top with peripheral projecting walls 7, formed integrally at the moment of production of the pallet 2 by moulding of plastic material.

In the absence of the eggs E within the cells 3, the trays 1 are instead positioned in the condition where they are set close to one another, as represented in Figure 4, in the same angular position, i.e., with the respective reference impressions 6 facing the same way. In this case, the projecting appendages 4 of the bottom tray 1 are aligned and centred with respect to the projecting appendages 4 of the top tray 1, engaging at the top within the cavities 5 of the former. In this way, the distance between the two trays 1 set on top of one another can be reduced from approximately 70 mm with respect to the condition represented in Figure 3, in the presence of the eggs E, to approximately 30 mm in the absence of the eggs E so as to facilitate storage of the trays on the site where the eggs are produced and facilitate transport during return from the site where the eggs E are incubated to the production site.

In the condition illustrated in Figure 3 where the trays are stacked on one another in the presence of the eggs E, the stacks of trays 1 can be positioned as described previously on the pallet 2 and thus be easily handled using a fork-lift truck for loading on the transport vehicle to be sent to the hatchery site and subsequent unloading and transfer to the incubators, thus avoiding the use of traditional metal supports or frames with wheels that are currently employed.

Thanks to the presence of the reference impressions 6, both the steps of stacking on the pallet 2 and the operations of picking up of the trays 1 from the pallet 2 for their transfer to the incubators can be performed, as has been said, in a mechanized and automatic way. To place the incubator H on the frame (represented schematically in Figure 6) the trays 1 must be repositioned one after another all in the same angular position, thus aligning the respective projecting appendages 4 with respect to one another. The trays 1 will thus be set on top of one another and separated by the distancing imposed by the pitch of the incubator, which is typically in the region of 105 mm. In a way in itself known, the frame of the incubator H is prearranged to cause the trays 1 thus placed to rotate alternately to one side and to the other, in the way represented by a solid line in Figure 6, passing through the horizontal position represented by a dashed line in the same figure. As may be seen in Figure 6, the height of the projecting appendages 4 is chosen, according to the invention, in such a way that during these movements of rotation there is no interference between each tray 1 and the corresponding underlying tray 1 in so far as the tops of the projecting appendages 4 of the underlying tray 1 can fit, without contact, between corresponding cells 3 of the overlying tray 1.

Of course, the details of construction and the embodiments may vary widely with respect to what has been described and illustrated herein, without thereby departing from the scope of the present invention as defined in ensuing claims.

## Claims

1. An egg-setter tray (1) for the transport of hatchery eggs (E) from the production site to an incubator (H) in a condition where said tray (1) is stacked together with similar trays (1), said tray (1) comprising a generally quadrangular body formed with parallel rows of cells (3) for containing the eggs (E) and being **characterized in that** it has appendages (4) projecting upwards to engage directly a similar overlying tray (1), selectively in a condition where the trays are set close to one another when said tray (1) and said overlying tray (1) are set in the same angular position, or in a condition where the trays are set at a distance apart when said tray (1) and said overlying tray (1) are set in angular positions different from one another, mutually turned 180°.

2. The tray according to Claim 1, **characterized in that** said projecting appendages (4) are provided in pairs located asymmetrically with respect to the centre of the body of the tray (1).

3. The tray according to Claim 2, **characterized in that** said projecting appendages (4) are hollow underneath and **in that** when two trays (1) are set on top of one another in said same angular position the projecting appendages (4) of the bottom tray engage within the cavities (5) of the projecting appendages (4) of the top tray.

4. The tray according to any one of Claims the preceding claims, **characterized in that** said projecting appendages (4) project from the tray (1) at such a height that when trays (1) set on top of one another in an incubator (H) are oscillated simultaneously from a horizontal position to an inclined position, the projecting appendages (4) of each underlying tray do not interfere with the respective overlying tray.

5. The tray according to one or more of the preceding claims, **characterized in that** said projecting appendages (4) have a tapered shape.

6. The tray according to one or more of the preceding claims, **characterized in that** identification means (6) are provided on one side of the body for enabling said side to be visually distinguished from the opposite side.

7. A system for the transport of hatchery eggs (E) from the production site to an incubator (H), **characterized in that** it uses stacks of trays (1) set on top of one another according to one or more of the preceding claims, and a pallet (2) on which the stacks of said trays (1) are to be rested.

8. The transport system according to Claim 7, **characterized in that** said pallet (2) is designed to receive two rows set alongside one another of said trays (1) stacked on top of one another.

9. The transport system according to Claim 7 or Claim 8, **characterized in that** said pallet is formed integrally with peripheral projecting walls (7).

## Patentansprüche

1. Eierträger (1) für den Transport von Bruteiern (E) vom Produktionsstandort zu einem Brutschrank (H) in einem Zustand, in dem der Träger (1) mit gleichartigen Trägem (1) gestapelt ist, wobei der Träger (1) einen im Allgemeinen viereckigen Körper umfasst, der mit zueinander parallelen Reihen von Zellen (3) zur Aufnahme der Eier (E) ausgebildet ist, und **dadurch gekennzeichnet ist, dass** er Ansätze (4) aufweist, die nach oben hervorstehen, um direkt in einen darüber liegenden gleichartigen Träger (1) einzugreifen, oder wahlweise in einem Zustand, in dem die Träger eng beieinander angeordnet sind, wenn der Träger (1) und der darüber liegende Träger (1) in derselben Winkelposition angeordnet sind, oder in einem Zustand, in dem die Träger in einem Abstand zueinander angeordnet sind, wenn der Träger (1) und der darüber liegende Träger (1) in unterschiedlichen, jeweils um 180° gedrehten Winkelpositionen angeordnet sind.

2. Träger nach Anspruch 1, **dadurch gekennzeichnet, dass** die hervorstehenden Ansätze (4) in Paaren bereitgestellt sind, die in Bezug auf die Körpermitte des Trägers (1) asymmetrisch angeordnet sind.

3. Träger nach Anspruch 2, **dadurch gekennzeichnet, dass** die hervorstehenden Ansätze (4) unterhalb hohl sind und dass, wenn zwei Träger (1) in derselben Winkelposition aufeinander angeordnet sind, die hervorstehenden Ansätze (4) des unteren Trägers in die Hohlräume (5) der hervorstehenden Ansätze (4) des oberen Trägers eingreifen.

4. Träger nach einem der vorangehenden Ansprüche, **dadurch gekennzeichnet, dass** die hervorstehenden Ansätze (4) in einer solchen Höhe aus dem Träger (1) hervorstehen, dass, wenn Träger (1) in einem Brutschrank (H) gleichzeitig aus einer horizontalen Position in eine geneigte Position geschwenkt werden, die hervorstehenden Ansätze (4) jedes darunterliegenden Trägers nicht den jeweiligen darüber liegenden Träger behindern.

5. Träger nach einem oder mehreren der vorangehenden Ansprüche, **dadurch gekennzeichnet, dass** die hervorstehenden Ansätze (4) eine konische Form aufweisen.

6. Träger nach einem oder mehreren der vorangehenden Ansprüche, **dadurch gekennzeichnet, dass** an einer Seite des Körpers Kennzeichnungsmittel (6) bereitgestellt sind, um eine visuelle Unterscheidung der Seite von der gegenüberliegenden Seite zu ermöglichen.

7. System für den Transport von Bruteiern (E) vom Produktionsstandort zu einem Brutschrank (H), **dadurch gekennzeichnet, dass** es Stapel von übereinander angeordneten Trägem (1) nach einem oder mehreren der vorangehenden Ansprüche und eine Palette (2), auf der die Stapel der Träger (1) gelagert werden, verwendet.

8. Transportsystem nach Anspruch 7, **dadurch gekennzeichnet, dass** die Palette (2) so gestaltet ist, dass sie zwei aneinander angeordnete Reihen der übereinander gestapelten Träger (1) aufnimmt.

9. Transportsystem nach Anspruch 7 oder Anspruch 8, **dadurch gekennzeichnet, dass** die Palette einstückig mit peripher hervorstehenden Wänden (7) ausgebildet ist.

## Revendications

1. Plateau à oeufs (1) pour le transport d'oeufs de couvoir (E) du site de production à un incubateur (H) dans une condition dans laquelle ledit plateau (1) est empilé conjointement avec des plateaux (1) similaires, ledit plateau (1) comprenant un corps généralement quadrangulaire formé avec des rangées parallèles d'alvéoles (3) pour contenir les oeufs (E) et étant **caractérisé en ce qu'**il a des appendices (4) faisant saillie vers le haut pour mettre directement en prise un plateau surjacent (1) similaire, sélectivement dans une condition dans laquelle les plateaux sont placés à proximité l'un de l'autre lorsque ledit plateau (1) et ledit plateau (1) surjacent sont placés dans la même position angulaire, ou bien dans une condition dans laquelle les plateaux sont placés à une distance lorsque ledit plateau (1) et ledit plateau (1) surjacent sont placés dans des positions angulaires différentes l'un de l'autre, mutuellement pivotés à 180°.

2. Plateau selon la revendication 1, **caractérisé en ce que** lesdits appendices en saillie (4) sont prévus en paires, positionnés de manière asymétrique par rapport au centre du corps du plateau (1).

3. Plateau selon la revendication 2, **caractérisé en ce que** lesdits appendices en saillie (4) sont creux au-dessous et **en ce que** lorsque deux plateaux (1) sont placés l'un sur l'autre dans ladite même position angulaire, les appendices en saillie (4) du plateau inférieur se mettent en prise à l'intérieur des cavités (5) des appendices en saillie (4) du plateau supérieur.

4. Plateau selon l'une quelconque des revendications précédentes, **caractérisé en ce que** lesdits appendices en saillie (4) font saillie du plateau (1) à une hauteur telle que lorsque les plateaux (1) placés les uns au-dessus des autres dans un incubateur (H) sont oscillés simultanément d'une position horizontale à une position inclinée, les appendices en saillie (4) de chaque plateau sous-jacent n'interfèrent pas avec le plateau surjacent respectif.

5. Plateau selon une ou plusieurs des revendications précédentes, **caractérisé en ce que** lesdits appendices en saillie (4) ont une forme progressivement rétrécie.

6. Plateau selon une ou plusieurs des revendications précédentes, **caractérisé en ce que** des moyens d'identification (6) sont prévus d'un côté du corps pour permettre audit côté d'être distingué visuellement du côté opposé.

7. Système pour le transport d'oeufs de couvoir (E) du site de production à un incubateur (H), **caractérisé en ce qu'**il utilise des piles de plateaux (1) placés les uns au-dessus des autres selon une ou plusieurs des revendications précédentes, et une palette (2) sur laquelle les piles desdits plateaux (1) doivent reposer.

8. Système de transport selon la revendication 7, **caractérisé en ce que** ladite palette (2) est conçue pour recevoir deux rangées placées l'une le long de l'autre desdits plateaux (1) empilés les uns au-dessus des autres.

9. Système de transport selon la revendication 7 ou la revendication 8, **caractérisé en ce que** ladite palette est formée de manière solidaire avec des parois en saillie périphériques (7).
